# EUROPEAN PATENT APPLICATION

(11) **EP 4 804 022 A1**
(43) Date of publication of application: **09.09.2026**
(21) Application number: 25220586.9
(22) Date of filing: 03.12.2025
(51) Int. Cl.: G06F 9/455, G06N 20/00

(54) **ENCODING MACHINE LEARNING MODEL RESPONSES INTO VIRTUALIZATION ENVIRONMENTS**

(30) Priority: 06.03.2025 US 202519072849
(71) Applicant: Red Hat, LLC, Raleigh, NC 27601 (US)
(72) Inventor: GRIFFIN, Leigh, Raleigh, 27601 (US); JENNINGS, Ivan, Raleigh, 27601 (US)
(74) Representative: Murgitroyd & Company

(57) **Abstract**

Techniques for analyzing a response generated by an ML model and determining an appropriate virtualization construct to embed the response into for secure transmission of the response to a requesting entity are disclosed. In response to receiving a prompt from a requesting entity, a machine learning (ML) model may generate a response to the prompt. The prompt may be analyzed to determine a virtualization construct to embed the response into for secure transmission of the response to the requesting entity. A set of rules for determining a virtualization construct may be used to analyze response characteristics and requesting entity information to determine the virtualization construct to embed the response into. Once the appropriate virtualization construct has been determined, the response may be embedded in the appropriate virtualization construct. The appropriate virtualization construct may be provided to requesting entity.

## Description

### TECHNICAL FIELD

Aspects of the present disclosure relate to machine learning models, and specifically to using virtualization environments (also referred to herein as "virtualization constructs") such as containers or container layers to securely distribute and/or integrate responses from a machine learning model such as a large language model (LLM).

### BACKGROUND

Machine learning (ML) models are often deployed on computing devices to perform/automate a number of different functions. A ML model may be trained to perform a function(s) using training data and then the trained ML model may be used to make predictions on new data. The process of training a ML model can be seen as a learning process where the ML model is exposed to new, unfamiliar data step by step. At each step, the ML model makes predictions and gets feedback about how accurate its generated predictions were. Once trained, the ML model can be deployed to perform the function it was trained to perform.

### SUMMARY

In accordance with a first aspect of the present disclosure, there is provided a method comprising: in response to receiving a prompt from a requesting entity, generating by a machine learning (ML) model, a response to the prompt; analyzing, by a processing device, the response to determine a virtualization construct to embed the response into; embedding the response in the virtualization construct; and providing the virtualization construct to the requesting entity.

The virtualization construct may comprise: a container selected from a set of predefined containers, wherein each of the set of predefined containers is defined with a set of parameters; or a container layer selected from a set of predefined container layers, wherein each of the set of predefined container layers is defined with a subset of the set of parameters.

The set of parameters may include functionality included in a particular virtualization construct, a level of cryptographic functionality included in the particular virtualization construct, and a resource footprint of the particular virtualization construct.

Determining the virtualization construct to embed the response into may comprise: identifying a set of operational conditions of the response; and determining as the virtualization construct, a virtualization construct defined with a set of parameters that most closely match the set of operational conditions of the response.

The set of operational conditions of the response may include: requestor information including software and hardware capabilities of a host device of the requesting entity, an ID of the requesting entity, security requirements of the requesting entity, response restrictions of the requesting entity, a request/response history of the requesting entity, and whether the requesting entity is running in a container; and response characteristics including response complexity, file types included in the response, a size of the response, and information included in the response.

Determining the virtualization construct to embed the response into may further comprise: determining a functionality required to utilize the response; determining that the requesting entity does not have the functionality required to utilize the response, wherein the virtualization construct is determined further based on the functionality required to utilize the response.

Providing the virtualization construct to the requesting entity may comprise: providing the virtualization construct via a network connection; or providing the virtualization construct to a container registry from which the requesting entity and one or more other requesting entities retrieve the virtualization construct.

In accordance with a second aspect of the present disclosure, there is provided a system. The system comprises: a memory; and a processing device operatively coupled to the memory, the processing device configured to: in response to receiving a prompt from a requesting entity, generate by a machine learning (ML) model, a response to the prompt; analyze the response to determine a virtualization construct to embed the response into; embed the response in the virtualization construct; and provide the virtualization construct to the requesting entity.

The virtualization construct may comprise: a container selected from a set of predefined containers, wherein each of the set of predefined containers is defined with a set of parameters; or a container layer selected from a set of predefined container layers, wherein each of the set of predefined container layers is defined with a subset of the set of parameters.

The set of parameters may include functionality included in a particular virtualization construct, a level of cryptographic functionality included in the particular virtualization construct, and a resource footprint of the particular virtualization construct.

To determine the virtualization construct to embed the response into, the processing device may be configured to: identify a set of operational conditions of the response; and determine as the virtualization construct, a virtualization construct defined with a set of parameters that most closely match the set of operational conditions of the response.

The set of operational conditions of the response may include: requestor information including software and hardware capabilities of a host device of the requesting entity, an ID of the requesting entity, security requirements of the requesting entity, response restrictions of the requesting entity, a request/response history of the requesting entity, and whether the requesting entity is running in a container; and response characteristics including response complexity, file types included in the response, a size of the response, and information included in the response.

To determine the virtualization construct to embed the response into, the processing device may be further configured to: determine a functionality required to utilize the response; determine that the requesting entity does not have the functionality required to utilize the response, wherein the virtualization construct is determined further based on the functionality required to utilize the response.

To provide the virtualization construct to the requesting entity, the processing device may be configured to: provide the virtualization construct via a network connection; or provide the virtualization construct to a container registry from which the requesting entity and one or more other requesting entities retrieve the virtualization construct.

In accordance with a third aspect of the present disclosure, there is provided a non-transitory computer-readable medium having instructions stored thereon which, when executed by a processing device, cause the processing device to perform the method of the first aspect or any of its optional examples. The non-transitory computer-readable medium having instructions stored thereon which, when executed by a processing device, cause the processing device to: in response to receiving a prompt from a requesting entity, generate by a machine learning (ML) model, a response to the prompt; analyze, by the processing device, the response to determine a virtualization construct to embed the response into; embed the response in the virtualization construct; and provide the virtualization construct to the requesting entity.

The virtualization construct may comprise: a container selected from a set of predefined containers, wherein each of the set of predefined containers is defined with a set of parameters; or a container layer selected from a set of predefined container layers, wherein each of the set of predefined container layers is defined with a subset of the set of parameters.

The set of parameters may include functionality included in a particular virtualization construct, a level of cryptographic functionality included in the particular virtualization construct, and a resource footprint of the particular virtualization construct.

To determine the virtualization construct to embed the response into, the processing device may be configured to: identify a set of operational conditions of the response; and determine as the virtualization construct, a virtualization construct defined with a set of parameters that most closely match the set of operational conditions of the response.

The set of operational conditions of the response may include: requestor information including software and hardware capabilities of a host device of the requesting entity, an ID of the requesting entity, security requirements of the requesting entity, response restrictions of the requesting entity, a request/response history of the requesting entity, and whether the requesting entity is running in a container; and response characteristics including response complexity, file types included in the response, a size of the response, and information included in the response.

To determine the virtualization construct to embed the response into, the processing device may be further configured to: determine a functionality required to utilize the response; determine that the requesting entity does not have the functionality required to utilize the response, wherein the virtualization construct is determined further based on the functionality required to utilize the response.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the scope of the described embodiments.
FIG. 1 is a block diagram that illustrates an example system, in accordance with some embodiments of the present disclosure.
FIGS. 2A and 2B are a block diagrams illustrating the example system of FIG. 1, executing a program to analyze a response generated by an ML model and determine an appropriate virtualization construct to embed the response into, in accordance with some embodiments of the present disclosure.
FIG. 3 is a diagram illustrating a specification file of a virtualization construct, in accordance with some embodiments of the present disclosure.
FIG. 4 is a block diagram illustrating the example system of FIG. 1, executing a program to analyze a response generated by an ML model and determine an appropriate virtualization construct to embed the response and functionality to interpret/utilize the response into, in accordance with some embodiments of the present disclosure.
FIG. 5 is a flow diagram of a method for analyzing a response generated by an ML model and determining an appropriate virtualization construct to embed the response into for secure transmission of the response to a requesting entity, in accordance with some embodiments of the present disclosure.
FIG. 6 is a block diagram of an example computing device that may perform one or more of the operations described herein, in accordance with some embodiments of the present disclosure.

### DETAILED DESCRIPTION

Many ML models such as LLMs have a prompt-response mechanism, wherein prompts from a requesting entity are received by the ML model, which may generate a response to the prompts and provide the response directly to the requesting entity. Some ML models implement this prompt-response mechanism in an agent/proxy capacity, and have the capability to translate prompts and interface with various internal systems of the host environment. These ML models can translate a prompt and execute an action corresponding to the prompt on an internal system, as well as provide a response to the prompt (based on execution of the action by the internal system) back to the requesting entity.

However, many internal systems that such ML models interface with store sensitive data such as personal information, files (e.g., configuration files), cryptographic information, and the like. As a result, during a "conversation" with such an ML model (i.e., multiple prompts and responses between a requesting entity and the ML model), the ML model's decision-making capability can involve the exposure of sensitive information stored by internal systems it has interacted with during the conversation. This is because a response generated by a particular internal system based on a prompt may include some of the sensitive data stored by the particular internal system and cannot be securely distributed "over the air" by the ML model. There is an increased risk of such exposure if the ML model functions as a gatekeeper/has a level of control over the internal system(s) in question. In addition, requesting entities often lack the capabilities required to successfully interpret and process a response from such an ML model. Thus, such ML models are often prevented from being used in environments associated with certain verticals (e.g., government, healthcare and legislation-driven verticals) as well as resource constrained environments such as Edge networks.

The present disclosure addresses the above-noted and other deficiencies by providing techniques for analyzing a response generated by an ML model and determining an appropriate virtualization construct to embed the response into for secure transmission of the response to a requesting entity. In response to receiving a prompt from a requesting entity, a machine learning (ML) model may generate a response to the prompt. The prompt may be analyzed to determine a virtualization construct to embed the response into for secure transmission of the response to the requesting entity. More specifically, a set of rules for determining a virtualization construct may be used to analyze response characteristics and requesting entity information to determine the virtualization construct to embed the response into. Once the appropriate virtualization construct has been determined, the response may be embedded in the appropriate virtualization construct. The appropriate virtualization construct may be provided to requesting entity.

Embodiments of the present disclosure provide techniques for securely providing a response generated by an ML model that includes sensitive content to a requesting entity and/or otherwise distributed. The sensitive content can be exposed when the response generated by the ML model is returned to the requesting entity and/or otherwise distributed within the determined virtualization construct. Embodiments of the present disclosure also allow a host of an ML model to show that the ML model's responses are being transmitted in a manner that is compliant with relevant security policies (e.g., requesting entity policies and/or host environment security policies) by showing that a certain encryption type, hashing algorithm, and/or encryption scheme etc. has been used.

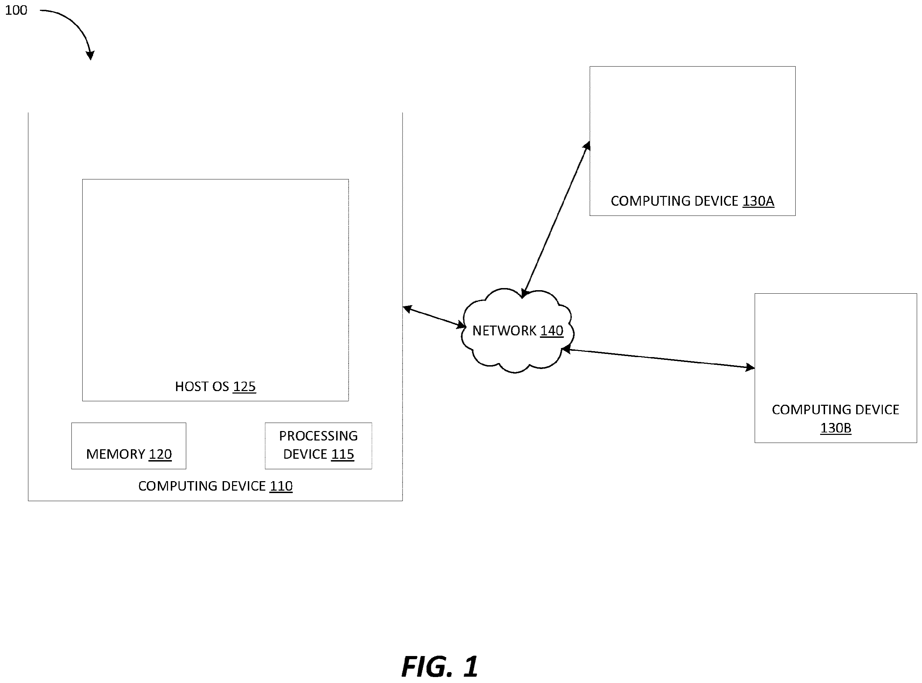

FIG. 1 is a block diagram that illustrates an example system 100. As illustrated in FIG. 1, the system 100 includes a computing device 110, and a plurality of computing devices 130. The computing devices 110 and 130 may be coupled to each other (e.g., may be operatively coupled, communicatively coupled, may communicate data/messages with each other) via network 140. Network 140 may be a public network (e.g., the internet), a private network (e.g., a local area network (LAN) or wide area network (WAN)), or a combination thereof. In one embodiment, network 140 may include a wired or a wireless infrastructure, which may be provided by one or more wireless communications systems, such as a WiFi^{™} hotspot connected with the network 140 and/or a wireless carrier system that can be implemented using various data processing equipment, communication towers (e.g., cell towers), etc. In some embodiments, the network 140 may be an L3 network. The network 140 may carry communications (e.g., data, message, packets, frames, etc.) between computing device 110 and computing devices 130. Each computing device 110 and 130 may include hardware such as processing device 115 (e.g., processors, central processing units (CPUs), memory 120 (e.g., random access memory (RAM), storage devices (e.g., hard-disk drive (HDD), solid-state drive (SSD), etc.)), and other hardware devices (e.g., sound card, video card, etc.). In some embodiments, memory 120 may be a persistent storage that is capable of storing data. A persistent storage may be a local storage unit or a remote storage unit. Persistent storage may be a magnetic storage unit, optical storage unit, solid state storage unit, electronic storage units (main memory), or similar storage unit. Persistent storage may also be a monolithic/single device or a distributed set of devices. Memory 120 may be configured for long-term storage of data and may retain data between power on/off cycles of the computing device 110. Each computing device may comprise any suitable type of computing device or machine that has a programmable processor including, for example, server computers, desktop computers, laptop computers, tablet computers, smartphones, set-top boxes, etc. In some examples, each of the computing devices 110 and 130 may comprise a single machine or may include multiple interconnected machines (e.g., multiple servers configured in a cluster). The computing devices 110 and 130 may be implemented by a common entity/organization or may be implemented by different entities/organizations. For example, computing device 110 may be operated by a first company/corporation and one or more computing devices 130 may be operated by a second company/corporation. Each of computing device 110 and computing devices 130 may execute or include an operating system (OS) such as host OS 125 of computing device 110, as discussed in more detail below. The host OS of a computing device may manage the execution of other components (e.g., software, applications, etc.) and/or may manage access to the hardware (e.g., processors, memory, storage devices etc.) of the computing device.

The system 100 may be any appropriate computing environment. In some embodiments, the system 100 may be configured as a scalable, distributed computing system, such as a container orchestration platform. A container orchestration platform is a platform for developing and running containerized applications and may allow applications and the data centers that support them to expand from just a few machines and applications to thousands of machines that serve millions of clients. Container orchestration platforms may provide an image-based deployment module for creating containers and may store one or more image files for creating container instances. In some embodiments, the computing device 110 may implement a control plane of a container orchestration platform while computing devices 130 may each implement a compute node of the container orchestration platform. Many application instances can be running in containers on a single host without visibility into each other's processes, files, network, and so on.

In other embodiments, the computing device 110 and the computing devices 130 may each comprise an edge device on which applications may run natively. Example edge devices may include assembly line tools, IoT gateways, points of sale, and industrial controllers that have to operate with limited computing resources, power, cooling, and connectivity. Edge devices can also be hard to access, or in settings with little or no on-site technical expertise. In some embodiments, the computing devices 110 and 130 may form a domain. A domain may include of a group of devices that share the same configuration, policies, and identity stores. The shared properties allow the devices within the domain to be aware of each other and operate together. The computing devices 130 may all be individual devices that are a part of a domain representing e.g., a fleet of internet of things (IoT) devices.

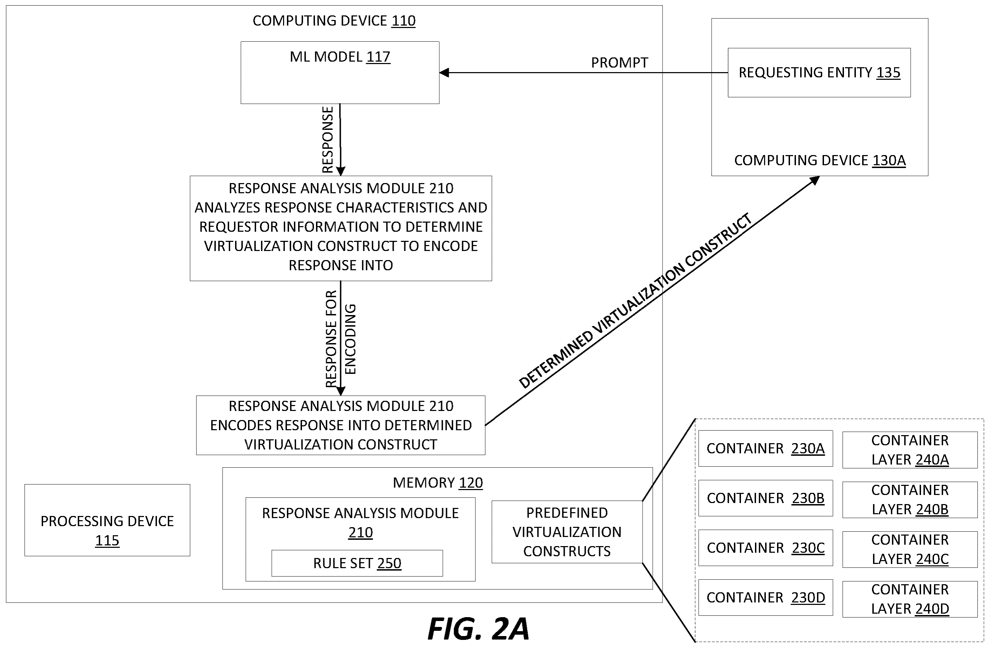

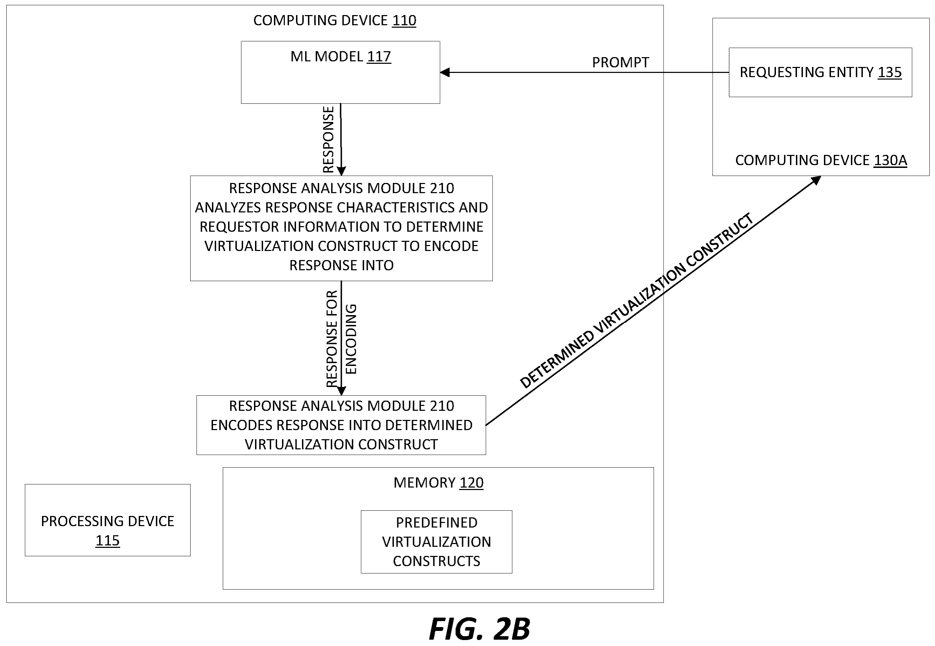

Referring to FIGS. 2A and 2B, the computing device 110 may execute a machine learning (ML) model 117. While the ML model 117 is shown in FIG. 2 as being executed on computing device 110, this is for example purposes only and the ML model 117 may also be executed on any computing device 130 as a service or part of a service.

The ML model 117 may be any appropriate ML model such as an LLM for example. The ML model 117 may comprise a number of components including ML processes, layers and any other appropriate ML model component. Examples of ML processes may include model training, inference, telemetry, prompt optimization, prompt sanitization, and data filtering. Each layer of the ML model 117 may include logic that receives weighted input (e.g., via matrix multiplication between input data and weights), transforms it with an activation function and outputs a non-linear transformation of the input data. The weights are the real values that are attached to each input (i.e., feature) and they convey the importance of that corresponding feature in generating the output. An activation function may comprise a set of functions (which can include non-linear and linear functions). The output of a layer is passed as input to the next layer. The output of the final layer is often referred to as the prediction.

In some embodiments where the ML model 117 is a large language model (LLM), each layer may include one or more attention modules (not shown) that each compute the relationship between different words in an input sequence. Each attention module may comprise an attention head and a feed forward network. While processing a word, an attention head enables the ML model 117 to focus on other words in the input sequence that are closely related to that word. The ML model 117 uses the attention head to relate every word in the input sequence to every other word in the input sequence. The feed forward network of each attention module may forward the output of its corresponding attention head to the attention head of the next attention module.

The computing device 130A may include a requesting entity 135 which may send prompts to the ML model 117. The requesting entity 135 may be e.g., an application that requires some data from an internal system (not shown) of computing device 110 and may send a prompt requesting access to such data to the ML model 117. The ML model 117 may translate the prompt and interface with the relevant internal system of the computing device 110 as discussed hereinabove to execute an action corresponding to the prompt on the internal system. Based on execution of the action by the internal system, the ML model 117 may generate a response to the prompt. The response of the ML model 117 may comprise a file (e.g., configuration file, PDF file), service descriptor, API contract, plain text or any other appropriate output. However, as discussed hereinabove, many internal systems store sensitive data such as personal information, files (e.g., configuration files), cryptographic information, and the like. As a result, the response generated by the ML model 117 may include this sensitive data which can be exposed when the response generated by the ML model 117 is returned to the requesting entity 135 and/or otherwise distributed. Thus, embodiments of the present disclosure provide techniques for encoding an ML model's responses into a virtual construct for secure transmission as discussed in further detail herein.

Continuing to refer to FIGS. 2A and 2B, the memory 120 may include a response analysis module 210 which may include logic to perform the response analysis and encoding functions described herein. The memory 120 may also store a plurality of predefined virtualization constructs. In the example of FIG. 2, the plurality of predefined virtualization constructs may include a set of containers 230 and a set of container layers 240. However, other types of virtualization constructs such as unikernels and virtual machines may also be used in addition to or as alternatives to predefined containers and container layers.

Each of the containers 230 may include the capability to integrate files and content (e.g., JPEGS, PDFs, etc.) in accordance with the open container initiative (OCI) specification and may be defined in accordance with a set of parameters. The set of parameters for each of the containers 230 may include functionality the container 230 is defined with, a level of cryptographic functionality the container 230 is defined with, other cryptographic settings of the container 230 (e.g., whether the container 230 is naturally encrypted or uses an encrypted persistent volume), and a resource footprint of the container 230. The functionality the container 230 is defined with may include e.g. functionality to run and install certain software for which environment variables may be defined, a deployment mechanism for the container 230 and a copy mechanism used by the container 230, among other parameters.

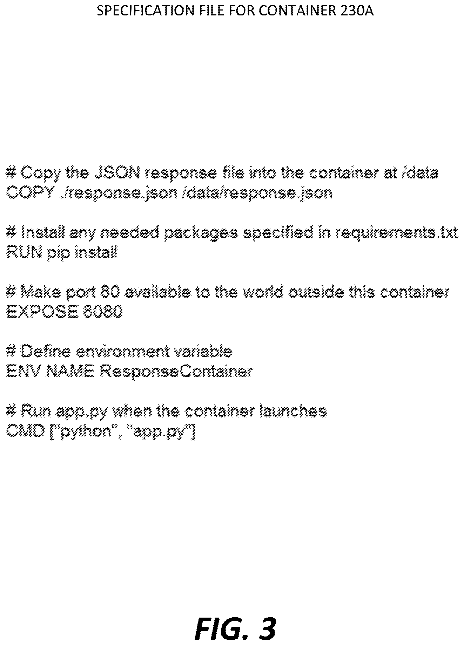

FIG. 3 illustrates a specification file of an example container 230A. As shown, the container 230A may issue commands to copy a response and place it on a certain path ("COPY ./response..."), may run and install certain software for which environment variables can be defined ("RUN pip install" and "ENV NAME ResponseContainer"), expose a certain port ("EXPOSE 8080") of the requesting entity 135, and serve the response as a Python application ("CMD ["python", "app.py"]"). Thus, in the example of FIG. 3, the container 230A can allow a (e.g., JSON format) response to be transposed in the container 230A and exposed using a Python application on port 8080 on the requesting entity 135. Thus, when the requesting entity 135 receives the container 230A with the response embedded therein, the requesting entity 135 knows it need to hit an API endpoint on that container to retrieve the response. To facilitate this, the response analysis module 210 can have an agreed API contract with the requesting entity 135 that indicates that anytime the requesting entity 135 receives a response, it should hit a certain API path (e.g., localhostportA/response) to retrieve the response.

The functionality of the container 230A may be split up across different layers. For example, the container 230A may include a first container layer with the functionality to copy a response and place it on a certain path, a second container layer with functionality to run and install certain software for which environment variables may be defined, a third container layer with functionality to serve the response as an application, and a fourth container layer with functionality to encrypt the response. The functionality to encrypt the response may be high level (e.g., heavyweight cryptography such as AES and RSA), medium level, or low-level cryptographic functionality (e.g., lightweight cryptography such as Ascon) and may also be naturally encrypted or use an encrypted persistent volume as discussed herein.

Referring back to FIGS. 2A and 2B, the set of predefined virtualization constructs may also include one or more container layers 240. Each of the container layers 240 may be defined with a subset of the set of parameters each of the containers 230 is defined with and may include a particular functionality. Each container layer 240 may have a smaller footprint than a container 230 and thus may be utilized in situations where only specific functionality is required. For example, if a response is in the JSON format, it may be desirable to simply copy the response and make it available as a layer for use in building a container. If the response is a PDF, it may be desirable to copy the response as well as encrypt it. If the response comprises an API manifest or cryptographic key, it may be desirable to copy the response, encrypt it and perform some additional functionality. In each of these example situations, the response may be embedded in a container layer 240 that includes the relevant functionality so as to avoid the footprint required to embed the response in a container 230.

Upon generating the response to the prompt from the requesting entity 135, the ML model 117 may provide the generated response to the response analysis module 210 which may analyze the response to determine the appropriate virtualization construct to encode the response into. The response analysis module 210 may implement a set of rules shown in FIG. 2A as rule set 250 which can be used along with response characteristics and requesting entity 135 information (hereinafter referred to as "requestor information"), to determine which virtualization construct is appropriate for embedding the response into. The response characteristics may include response complexity, file types included in the response, a size of the response, and information included in the response (e.g., sensitive information such as personal information/configuration files/cryptographic information and non-sensitive information such as outside temperature). The requestor information may include information such as a requestor profile of the requesting entity 135, software and hardware capabilities of a host device of the requesting entity 135 (i.e., computing device 130A), and whether the requesting entity 135 is running in a container. The requestor profile of the requesting entity 135 may include an ID of the requesting entity 135, security requirements (e.g., a minimum level of cryptographic encoding required for responses provided to the requesting entity 135), response restrictions (e.g., restrictions on file types, a size of the response etc. imposed by the requesting entity 135) and a request/response history of the requesting entity 135, among other information.

The response analysis module 210 may obtain the requestor information via the ML model 117 from the requesting entity 135 itself during e.g., a handshake process between the requesting entity 135 and the ML model 117 as well as by monitoring request/response interactions between the requesting entity 135 and the ML model 117.

The response analysis module 210 may utilize the rule set 250 to analyze the response characteristics and the requestor information and determine which type of virtualization construct (e.g., container 230 or container layer 240) to embed the response into as well as which particular predefined container 230 or container layer 240 to embed the response into. Each rule of the rule set 250 may relate an operational consideration associated with a response (i.e., an aspect of either the response characteristics or the requestor information) to a limit(s) or restriction(s) on the appropriate virtualization constructs. The response analysis module 210 may use relevant rules from the rule set 250 that correspond to operational considerations of the response to identify a virtualization construct having parameters that most closely match the set of operational considerations of the response as discussed in further detail herein.

For example, a first rule of the rule set 250 may state that a determination of which type of virtualization construct to embed the response into is based on a complexity of the response, security requirements of the requesting entity 135 and a request/response history of the requesting entity 135 among other requestor information. More specifically, the first rule may state that if the response is complex (e.g., includes complex content such as executable files) and/or originates from a requesting entity having high security requirements (e.g., that cannot be fulfilled by a container layer 240), then a container 230 should be selected. The first rule may also state that if the response includes less complex content (i.e., not requiring a container 230) then the response to the current request should be embedded in a container layer 240 as long as a container layer 240 having cryptographic functionality matching the security requirements of the requesting entity 135 exists and the requesting entity 135 is already running in a container. A second rule may further state that if the current request is part of a series of related requests and a previous response was embedded in a container 230 and provided to the requesting entity 135, then the response to the current request should be embedded in a container layer 240 as long as a container layer 240 having cryptographic functionality matching the security requirements of the requesting entity 135 exists. The first and second rules discussed above are for example purposes only, and a determination of which type of virtualization construct to embed the response into may be based on various combinations of requestor information and response characteristics with heavier weights assigned to some factors and lower weights assigned to others.

When the response analysis module 210 is determining a container 230 to embed the response into, a third rule of the rule set 250 may state that if a response includes sensitive data (e.g., cryptographic key, private information), the response must be encoded in a container 230 having the highest level of cryptographic functionality. Conversely, a fourth rule of the rule set 250 may state that if a response does not include sensitive information (e.g., only has information such as outside temperature), the response should be encoded in a container 230 having a lower level of cryptographic functionality (and thus, a smaller footprint) as long as doing so does not violate security requirements of the requesting entity 135. The rule set 250 may include similar rules to apply when the response analysis module 210 is determining a particular container layer 240 to embed the response into. The example rules discussed above are for example purposes only, and a determination of which container 230 or container layer 240 to embed the response into may be based on various combinations of requestor information and response characteristics with heavier weights assigned to some factors and lower weights assigned to others.

Once the response analysis module 210 has determined the appropriate virtualization construct to embed the response into, it may embed the response into the determined virtualization construct and provide the virtualization construct with the embedded response to the requesting entity 135. In some embodiments, the response analysis module 210 may provide the virtualization construct with the embedded response to the requesting entity 135 directly via a network connection (e.g., SSL tunnel) where the requesting entity 135 can decrypt the virtualization construct with the embedded response and perform interpretation, integration and rebuilding tasks as necessary to access the content therein.

In other embodiments, the response analysis module 210 can send the virtualization construct with the embedded response to a container registry (not shown) where one or more users can pull the virtualization construct from the container registry. This allows for one-to-many distribution, where one entity can send a prompt to the ML model 117 and multiple entities can access the response. This is particularly useful in scenarios involving a heterogeneous network with a number of identical devices (requesting entities), where a first device can ask for a configuration update, and instead of the remaining devices having to ask for the update themselves, they can pull the update directly from the container registry. This also provides an additional level of security because the container registry is contained/self-enclosed.

As shown, embodiments of the present disclosure provide techniques for encoding into a virtual construct, a prompt response that is generated by an ML model and that includes sensitive content, thereby allowing the response to be securely transmitted to a requesting entity and/or otherwise distributed. The sensitive content can be exposed when the response generated by the ML model is returned to the requesting entity and/or otherwise distributed within the determined virtualization construct. Embodiments of the present disclosure also allow a host of an ML model to show that the ML model's responses are being transmitted in a manner that is compliant with relevant security policies (e.g., requesting entity policies and/or host environment security policies) by showing that a certain encryption type, hashing algorithm, and/or encryption scheme etc. has been used.

Responses generated by the ML model 117 may often include content that requires certain functionality to interpret/utilize. For example, a response may include a PDF which requires Adobe Acrobat^{™} or other PDF reader software. In another example, the response may include a cryptographic key which requires software to interpret the cryptographic key. Requesting entities and the devices they are hosted on may not always have the necessary functionality required to interpret/utilize a response. Thus, in some embodiments, the response analysis module 210 may embed not just the response into the virtualization construct, but also the logic/functionality required by the requesting entity 135 to interpret/utilize the response. In such embodiments, the response analysis module 210 may analyze the content of the response to determine the functionality required to interpret/utilize the response. The response analysis module 210 may also determine the capabilities of the requesting entity 135 and its host device (computing device 130A) to determine whether the requesting entity 135 or computing device 130A has the required functionality. The response analysis module 210 may then determine an appropriate virtualization construct to embed the response and the required functionality into.

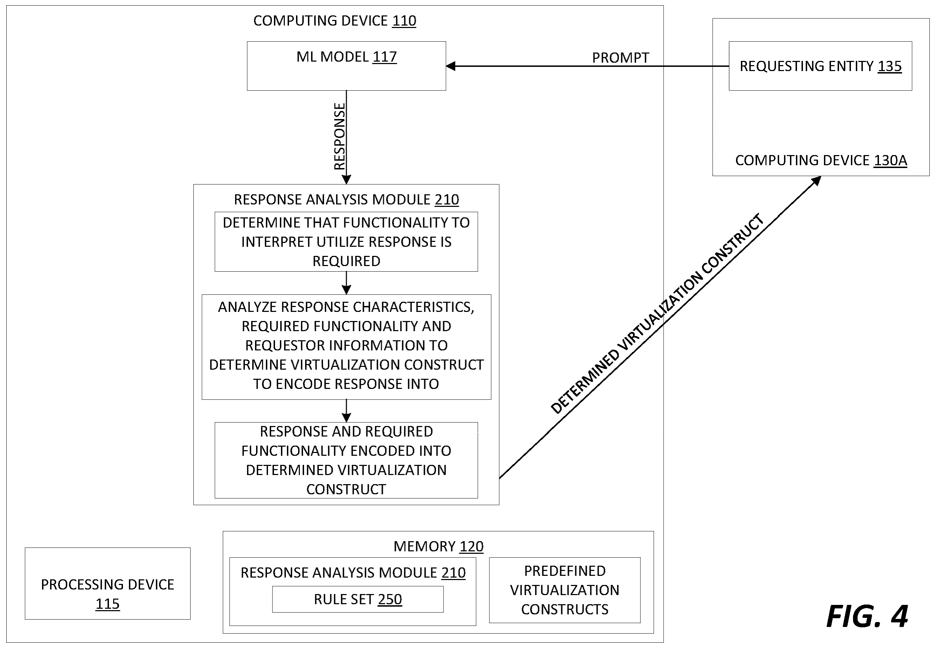

FIG. 4 illustrates the process of embedding a response as well as functionality to interpret/utilize the response into a virtualization construct in accordance with some embodiments of the present disclosure. When a response is generated by the ML model 117, the response analysis module 210 may determine if the response requires certain functionality to interpret/utilize the response and what specific functionality is required to interpret/utilize the response. For example, the response analysis module 210 may determine whether the response includes data that requires particular software to interpret/utilize such as a cryptographic key or a PDF file. If the response is determined to require particular software to interpret/utilize it, the analysis module 210 may also determine the capabilities of the requesting entity 135/computing device 130A (its host device) from the requestor information discussed above. In some embodiments, over the course of multiple interactions between the ML model 117 and different requesting entities, the response analysis module 210 may maintain a mapping table of a requestor ID of each requesting entity that has interacted with the ML model 117 and the capabilities of a corresponding host device (including hardware specifications and software that is installed on the host device).

In some embodiments, the rule set 250 may include additional rules (not shown) for determining an appropriate virtualization construct to embed the response and functionality required to interpret/utilize the response into. Each rule of the additional rules of the rule set 250 may define an operational consideration associated with the functionality required to interpret/utilize the response (e.g., a size of the files associated with such functionality, the type of functionality, duration of use, allowed users/services (e.g. based an authorization list)) and limits/restrictions on the appropriate virtualization constructs based thereon. In some embodiments, instead of having additional rules, the rule set 250 may include a rule that specifies that if functionality required to interpret/utilize the response must also be embedded, then a particular type of virtualization construct (e.g., container 230) must be selected. A particular container 230 may then be selected based on the rules in the rule set 250 discussed hereinabove.

In some embodiments where a particular type of virtualization construct (e.g., container 230) must be selected due to functionality required to interpret/utilize the response also needing to be embedded, the response analysis module 210 may embed the response and the required functionality as a new layer in the selected container 230.

Because of this layer-based mechanism, the metadata returned with the response allows for construction of a customized container that ensures interoperability of various requesting entities, host devices and/or environments so that it is not necessary to assume that a requesting entity is using a particular type of machine (e.g., Mac, Windows) and universally interpretable responses can be created.

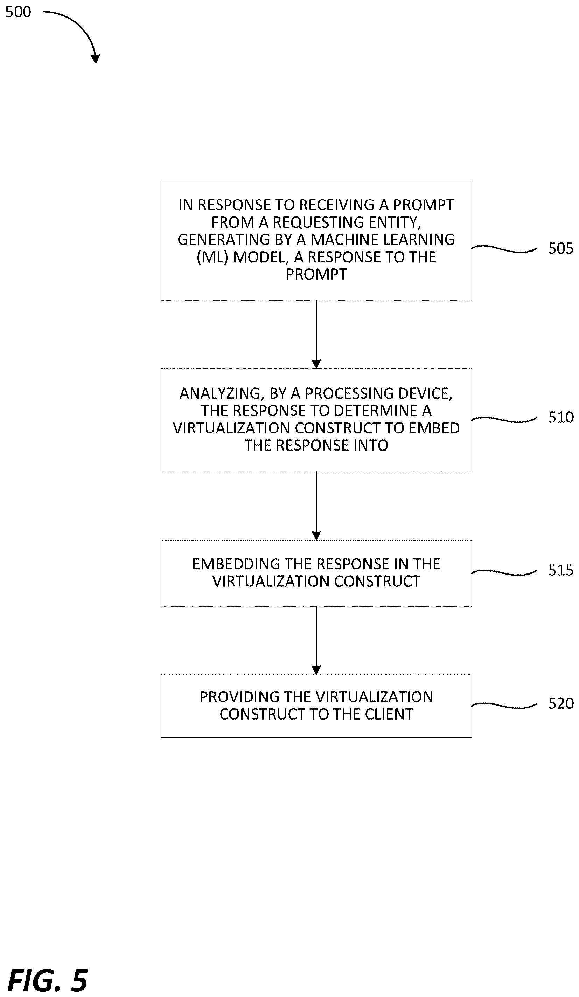

FIG. 5 is a flow diagram of a method 500 for analyzing a response generated by an ML model and determining an appropriate virtualization construct to embed the response into for secure transmission of the response to a requesting entity, in accordance with some embodiments of the present disclosure. Method 500 may be performed by processing logic that may comprise hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, the method 500 may be performed by a computing device (e.g., computing device 110 illustrated in FIGS. 1-4).

Referring also to FIGS. 2A and 2B, at block 505, upon receiving a prompt from a requesting entity 135, an ML model 117 may generate a response to the prompt and may provide the generated response to the response analysis module 210. At block 510, the response analysis module 210 may analyze the response to determine the appropriate virtualization construct to encode the response into. The response analysis module 210 may implement a set of rules shown in FIG. 2A as rule set 250 which can be used along with response characteristics and requesting entity 135 information (hereinafter referred to as "requestor information"), to determine which virtualization construct is appropriate for embedding the response into. The response characteristics may include response complexity, file types included in the response, a size of the response, and information included in the response (e.g., sensitive information such as personal information/configuration files/cryptographic information and non-sensitive information such as outside temperature). The requestor information may include information such as a requestor profile of the requesting entity 135, software and hardware capabilities of a host device of the requesting entity 135 (i.e., computing device 130A), and whether the requesting entity 135 is running in a container. The requestor profile of the requesting entity 135 may include an ID of the requesting entity 135, security requirements (e.g., a minimum level of cryptographic encoding required for responses provided to the requesting entity 135), response restrictions (e.g., restrictions on file types, a size of the response etc. imposed by the requesting entity 135) and a request/response history of the requesting entity 135, among other information.

The response analysis module 210 may obtain the requestor information via the ML model 117 from the requesting entity 135 itself during e.g., a handshake process between the requesting entity 135 and the ML model 117 as well as by monitoring request/response interactions between the requesting entity 135 and the ML model 117.

The response analysis module 210 may utilize the rule set 250 to analyze the response characteristics and the requestor information and determine which type of virtualization construct (e.g., container 230 or container layer 240) to embed the response into as well as which particular predefined container 230 or container layer 240 to embed the response into. Each rule of the rule set 250 may relate an operational consideration associated with a response (i.e., an aspect of either the response characteristics or the requestor information) to a limit(s) or restriction(s) on the appropriate virtualization constructs. The response analysis module 210 may use relevant rules from the rule set 250 that correspond to operational considerations of the response to identify a virtualization construct having parameters that most closely match the set of operational considerations of the response as discussed in further detail herein.

For example, a first rule of the rule set 250 may state that a determination of which type of virtualization construct to embed the response into is based on a complexity of the response, security requirements of the requesting entity 135 and a request/response history of the requesting entity 135 among other requestor information. More specifically, the first rule may state that if the response is complex (e.g., includes complex content such as executable files) and/or originates from a requesting entity having high security requirements (e.g., that cannot be fulfilled by a container layer 240), then a container 230 should be selected. The first rule may also state that if the response includes less complex content (i.e., not requiring a container 230) then the response to the current request should be embedded in a container layer 240 as long as a container layer 240 having cryptographic functionality matching the security requirements of the requesting entity 135 exists and the requesting entity 135 is already running in a container. A second rule may further state that if the current request is part of a series of related requests and a previous response was embedded in a container 230 and provided to the requesting entity 135, then the response to the current request should be embedded in a container layer 240 as long as a container layer 240 having cryptographic functionality matching the security requirements of the requesting entity 135 exists. The first and second rules discussed above are for example purposes only, and a determination of which type of virtualization construct to embed the response into may be based on various combinations of requestor information and response characteristics with heavier weights assigned to some factors and lower weights assigned to others.

When the response analysis module 210 is determining a container 230 to embed the response into, a third rule of the rule set 250 may state that if a response includes sensitive data (e.g., cryptographic key, private information), the response must be encoded in a container 230 having the highest level of cryptographic functionality. Conversely, a fourth rule of the rule set 250 may state that if a response does not include sensitive information (e.g., only has information such as outside temperature), the response should be encoded in a container 230 having a lower level of cryptographic functionality (and thus, a smaller footprint) as long as doing so does not violate security requirements of the requesting entity 135. The rule set 250 may include similar rules to apply when the response analysis module 210 is determining a particular container layer 240 to embed the response into. The example rules discussed above are for example purposes only, and a determination of which container 230 or container layer 240 to embed the response into may be based on various combinations of requestor information and response characteristics with heavier weights assigned to some factors and lower weights assigned to others.

Once the response analysis module 210 has determined the appropriate virtualization construct to embed the response into, at block 515 it may embed the response into the determined virtualization construct and at block 520, may provide the virtualization construct with the embedded response to the requesting entity 135. In some embodiments, the response analysis module 210 may provide the virtualization construct with the embedded response to the requesting entity 135 directly via a network connection (e.g., SSL tunnel) where the requesting entity 135 can decrypt the virtualization construct with the embedded response and perform interpretation, integration and rebuilding tasks as necessary to access the content therein.

In other embodiments, the response analysis module 210 can send the virtualization construct with the embedded response to a container registry (not shown) where one or more users can pull the virtualization construct from the container registry. This allows for one-to-many distribution, where one entity can send a prompt to the ML model 117 and multiple entities can access the response. This is particularly useful in scenarios involving a heterogeneous network with a number of identical devices (requesting entities), where a first device can ask for a configuration update, and instead of the remaining devices having to ask for the update themselves, they can pull the update directly from the container registry. This also provides an additional level of security because the container registry is contained/self-enclosed.

As shown, embodiments of the present disclosure provide techniques for encoding an ML model's responses into a virtual construct allow a response generated by the ML model that includes sensitive content to be securely transmitted to a requesting entity and/or otherwise distributed. The sensitive content can be exposed when the response generated by the ML model is returned to the requesting entity and/or otherwise distributed. Embodiments of the present disclosure also allow a host of an ML model to show that the ML model's responses are being transmitted in a manner that is compliant with relevant security policies (e.g., requesting entity policies and/or host environment security policies) by showing that a certain encryption type, hashing algorithm, and/or encryption scheme etc. has been used.

FIG. 4 illustrates the process of embedding a response as well as functionality to interpret/utilize the response into a virtualization construct in accordance with some embodiments of the present disclosure. When a response is generated by the ML model 117, the response analysis module 210 may determine if the response requires certain functionality to interpret/utilize the response and what specific functionality is required to interpret/utilize the response. For example, the response analysis module 210 may determine whether the response includes data that requires particular software to interpret/utilize such as a cryptographic key or a PDF file. If the response is determined to require particular software to interpret/utilize it, the analysis module 210 may also determine the capabilities of the requesting entity 135/computing device 130A (its host device) from the requestor information discussed above. In some embodiments, over the course of multiple interactions between the ML model 117 and different requesting entities, the response analysis module 210 may maintain a mapping table of a requestor ID of each requesting entity that has interacted with the ML model 117 and the capabilities of a corresponding host device (including hardware specifications and software that is installed on the host device).

In some embodiments, the rule set 250 may include additional rules (not shown) for determining an appropriate virtualization construct to embed the response and functionality required to interpret/utilize the response into. Each rule of the additional rules of the rule set 250 may define an operational consideration associated with the functionality required to interpret/utilize the response (e.g., a size of the files associated with such functionality, the type of functionality and limits/restrictions on the appropriate virtualization constructs based thereon. In some embodiments, instead of having additional rules, the rule set 250 may include a rule that specifies that if functionality required to interpret/utilize the response must also be embedded, then a particular type of virtualization construct (e.g., container 230) must be selected. A particular container 230 may then be selected based on the rules in the rule set 250 discussed hereinabove.

In some embodiments where a particular type of virtualization construct (e.g., container 230) must be selected due to functionality required to interpret/utilize the response also needing to be embedded, the response analysis module 210 may embed the response and the required functionality as a new layer in the selected container 230.

Because of this layer-based mechanism, the metadata returned with the response allows for construction of a customized container that ensures interoperability of various requesting entities, host devices and/or environments so that it is not necessary to assume that a requesting entity is using a particular type of machine (e.g., Mac, Windows) and universally interpretable responses can be created.

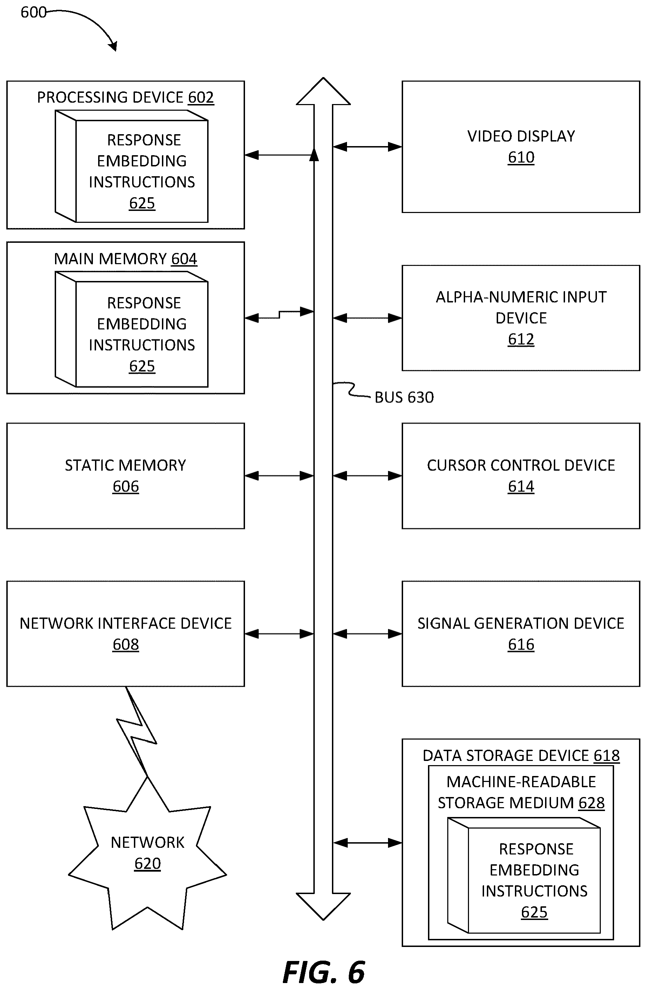

FIG. 6 illustrates a diagrammatic representation of a machine in the example form of a computer system 600 within which a set of instructions, for causing the machine to perform any one or more of the methodologies discussed herein. In alternative embodiments, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In one embodiment, computer system 600 may be representative of a server.

The exemplary computer system 600 includes a processing device 602, a main memory 604 (e.g., read-only memory (ROM), flash memory, dynamic random access memory (DRAM), a static memory 606 (e.g., flash memory, static random access memory (SRAM), etc.), and a data storage device 618, which communicate with each other via a bus 630. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

Computing device 600 may further include a network interface device 608 which may communicate with a network 620. The computing device 600 also may include a video display unit 610 (*e.g.,* a liquid crystal display (LCD) or a cathode ray tube (CRT)), an alphanumeric input device 612 (*e.g.,* a keyboard), a cursor control device 614 (*e.g.,* a mouse) and an acoustic signal generation device 616 (*e.g.,* a speaker). In one embodiment, video display unit 610, alphanumeric input device 612, and cursor control device 614 may be combined into a single component or device (*e.g*., an LCD touch screen).

Processing device 602 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. Processing device 602 may also be one or more special-purpose processing devices such as an application specific integrated circuit (ASIC), a field programmable gate array (FPGA), a digital signal processor (DSP), network processor, or the like. The processing device 602 is configured to execute response embedding instructions 625, for performing the operations and steps discussed herein.

The data storage device 618 may include a machine-readable storage medium 628, on which is stored one or more sets of response embedding instructions 625 (e.g., software) embodying any one or more of the methodologies of functions described herein. The response embedding instructions 625 may also reside, completely or at least partially, within the main memory 604 or within the processing device 602 during execution thereof by the computer system 600; the main memory 604 and the processing device 602 also constituting machine-readable storage media. The response embedding instructions 625 may further be transmitted or received over a network 620 via the network interface device 608.

The machine-readable storage medium 628 may also be used to store instructions to perform a method for assigning tasks using an automation controller. While the machine-readable storage medium 628 is shown in an exemplary embodiment to be a single medium, the term "machine-readable storage medium" should be taken to include a single medium or multiple media (e.g., a centralized or distributed database, or associated caches and servers) that store the one or more sets of instructions. A machine-readable medium includes any mechanism for storing information in a form (e.g., software, processing application) readable by a machine (e.g., a computer). The machine-readable medium may include, but is not limited to, magnetic storage medium (e.g., floppy diskette); optical storage medium (e.g., CD-ROM); magneto-optical storage medium; read-only memory (ROM); random-access memory (RAM); erasable programmable memory (e.g., EPROM and EEPROM); flash memory; or another type of medium suitable for storing electronic instructions.

Unless specifically stated otherwise, terms such as "generating," "analyzing," "embedding," "providing" and the like refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. 112, sixth paragraph, for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the invention is not to be limited to the details given herein, but may be modified within the scope of the appended claims.

## Claims

1. A method comprising:
in response to receiving a prompt from a requesting entity, generating by a machine learning (ML) model, a response to the prompt;
analyzing, by a processing device, the response to determine a virtualization construct to embed the response into;
embedding the response in the virtualization construct; and
providing the virtualization construct to the requesting entity.

2. The method of claim 1, wherein the virtualization construct comprises:
a container selected from a set of predefined containers, wherein each of the set of predefined containers is defined with a set of parameters; or
a container layer selected from a set of predefined container layers, wherein each of the set of predefined container layers is defined with a subset of the set of parameters.

3. The method of claim 2, wherein the set of parameters include functionality included in a particular virtualization construct, a level of cryptographic functionality included in the particular virtualization construct, and a resource footprint of the particular virtualization construct.

4. The method of claim 1, wherein determining the virtualization construct to embed the response into comprises:
identifying a set of operational conditions of the response; and
determining as the virtualization construct, a virtualization construct defined with a set of parameters that most closely match the set of operational conditions of the response.

5. The method of claim 4, wherein the set of operational conditions of the response include:
requestor information including software and hardware capabilities of a host device of the requesting entity, an ID of the requesting entity, security requirements of the requesting entity, response restrictions of the requesting entity, a request/response history of the requesting entity, and whether the requesting entity is running in a container; and
response characteristics including response complexity, file types included in the response, a size of the response, and information included in the response.

6. The method of claim 4, wherein determining the virtualization construct to embed the response into further comprises:
determining a functionality required to utilize the response;
determining that the requesting entity does not have the functionality required to utilize the response, wherein the virtualization construct is determined further based on the functionality required to utilize the response.

7. The method of claim 1, wherein providing the virtualization construct to the requesting entity comprises:
providing the virtualization construct via a network connection; or
providing the virtualization construct to a container registry from which the requesting entity and one or more other requesting entities retrieve the virtualization construct.

8. A system comprising:
a memory; and
a processing device operatively coupled to the memory, the processing device configured to:
in response to receiving a prompt from a requesting entity, generate by a machine learning (ML) model, a response to the prompt;
analyze the response to determine a virtualization construct to embed the response into;
embed the response in the virtualization construct; and
provide the virtualization construct to the requesting entity.

9. The system of claim 8, wherein the virtualization construct comprises:
a container selected from a set of predefined containers, wherein each of the set of predefined containers is defined with a set of parameters; or
a container layer selected from a set of predefined container layers, wherein each of the set of predefined container layers is defined with a subset of the set of parameters.

10. The system of claim 9, wherein the set of parameters include functionality included in a particular virtualization construct, a level of cryptographic functionality included in the particular virtualization construct, and a resource footprint of the particular virtualization construct.

11. The system of claim 8, wherein to determine the virtualization construct to embed the response into, the processing device is configured to:
identify a set of operational conditions of the response; and
determine as the virtualization construct, a virtualization construct defined with a set of parameters that most closely match the set of operational conditions of the response.

12. The system of claim 11, wherein the set of operational conditions of the response include:
requestor information including software and hardware capabilities of a host device of the requesting entity, an ID of the requesting entity, security requirements of the requesting entity, response restrictions of the requesting entity, a request/response history of the requesting entity, and whether the requesting entity is running in a container; and
response characteristics including response complexity, file types included in the response, a size of the response, and information included in the response.

13. The system of claim 11, wherein to determine the virtualization construct to embed the response into, the processing device is further configured to:
determine a functionality required to utilize the response;
determine that the requesting entity does not have the functionality required to utilize the response, wherein the virtualization construct is determined further based on the functionality required to utilize the response.

14. The system of claim 8, wherein to provide the virtualization construct to the requesting entity, the processing device is configured to:
provide the virtualization construct via a network connection; or
provide the virtualization construct to a container registry from which the requesting entity and one or more other requesting entities retrieve the virtualization construct.

15. A non-transitory computer-readable medium having instructions stored thereon which, when executed by a processing device, cause the processing device to perform the method of any of claims 1 to 7.
